# EUROPÄISCHE PATENTANMELDUNG

(11) **EP 2 193 872 A1**
(43) Veröffentlichungstag der Anmeldung: **09.06.2010**
(21) Anmeldenummer: 09013918.9
(22) Anmeldetag: 05.11.2009
(51) Int. Cl.: B23K 15/00, B23K 15/04, B23P 15/00, C21D 1/30, C21D 9/50, F01D 5/06

(54) **Verfahren zur Herstellung eines geschweißten Rotors für ein Gasturbinentriebwerk mit Wärmbehandlung der Schweissnaht und ihrer angrenzenden Wärmeeinflusszone mit unterschiedlichen Temperaturen**

(30) Priorität: 04.12.2008 DE 102008060205
(71) Anmelder: Rolls-Royce Deutschland Ltd & Co KG, 15827 Blankenfelde-Mahlow (DE)
(72) Erfinder: Schreiber, Karl, 15838 Am Mellensee (DE); Grossmann, Kim, 14959 Trebbin (DE)
(74) Vertreter: Hager, Thomas Johannes

(57) **Zusammenfassung**

Bei einem Verfahren zur Herstellung geschweißter Rotoren (5) für ein Gasturbinentriebwerk, bei dem zwei oder mehrere Rotorscheiben (1) mit herkömmlichen Schweißverfahren durch radial zur Rotorachse verlaufende Schweißnähte (3) miteinander verbunden werden und der Schweißnahtbereich anschließend einer Wärmebehandlung bei einer Temperatur zum Abbau von Zugeigenspannungen infolge Relaxation unterworfen wird, wird die Schweißnaht (3) auf ein deutlich niedrigeres, keine Relaxation bewirkendes Temperaturniveau als die an die Schweißnaht (3) angrenzende Wärmeeinflusszone eingestellt und dabei aufgrund des hohen Temperaturgradienten eine Druckeigenspannung oder zumindest stark reduzierte Zugeigenspannung in die Schweißnaht (3) eingeprägt. Gegenüber konventionell wärmebehandelten, geschweißten Rotoren (5) werden infolge der so Spannungen verbesserte Festigkeitseigenschaften im Schweißnahtbereich und eine erhöhte Lebensdauer erreicht.

## Beschreibung

Die Erfindung betrifft ein Verfahren zur Herstellung eines geschweißten Rotors für ein Gasturbinentriebwerk, bei dem zwei oder mehrere Rotorscheiben mit herkömmlichen Schweißverfahren durch radial zur Rotorachse verlaufende Schweißnähte miteinander verbunden werden und der Schweißnahtbereich anschließend einer Wärmebehandlung zum Abbau von Zugeigenspannungen unterworfen wird.

Die Verdichter und Turbinen eines Gasturbinentriebwerks enthalten jeweils mehrere, miteinander zu einem Rotor (Rotortrommel) verbundene, mit hoher Drehgeschwindigkeit um eine Triebwerksachse rotierende Rotorlaufräder, die aus einer Rotorscheibe mit sich von deren Umfangsrand radial erstreckenden Schaufeln bestehen. Neben geschraubten Rotoren sind seit langem auch geschweißte Rotoren bekannt, bei denen jeweils unmittelbar aneinander grenzende Rotorscheiben entlang ihrer gegenseitigen Berührungsflächen mittels einer nach herkömmlichen Schweißtechniken hergestellten Schweißnaht miteinander verbunden sind. Die Vorteile der Schweißverbindung gegenüber der Schraubverbindung liegen in der Gewichtseinsparung, den geringeren Festigkeitseinbußen und dem günstigeren Kraftfluss sowie der Formgestaltungsfreiheit. Bevorzugt angewendete Schweißverfahren zur Verbindung der einzelnen Rotorscheiben sind das Elektronenstrahlscheißen und das Reibschweißen. Alternative Schweißtechniken sind, um nur einige zu nennen, das Laser-, Ultraschall-, Induktions-, Schutzgas- oder Lichtbogenschweißen. Die Anwendung des Elektronenstrahlschweißens ist insofern vorteilhaft, als aufgrund der hohen Energiedichte ein in die Tiefe des Materials wirkender Schweißprozess gewährleistet ist und bei Anwendung dieser Technik die Schweißspannungen und die daraus resultierende Gefahr des Verziehens der Schweißkonstruktion vergleichsweise gering sind. Infolge des Schweißvorgangs wird jedoch in der sich beiderseits an das Schweißgut anschließenden Wärmeeinflusszone das Mikrogefüge des Grundwerkstoffs durch Bildung von Grob- bzw. Feinkorn sowie teilweise Gefügeumwandlungen bzw. Ausscheidungen von Phasen im Korn und an den Korngrenzen zerstört. Ein weiterer - beim Elektronenstrahlschweißen auftretender - Schwachpunkt ist die Überlappung der Schweißnaht am Anfangs- und Endpunkt und die damit einhergehende Entstehung von Unstetigkeiten. Ein weiteres wesentliches Problem ist zudem die mit dem Erkalten des Schweißgutes verbundene Schrumpfung und die daraus resultierende umlaufende Zugeigenspannung in der Schweißnaht. Dieser Bereich schlechtester Werkstoffqualität und verminderter mechanischer Eigenschaften unterliegt im Betrieb, das heißt während der Rotation des geschweißten Rotors mit hoher Drehgeschwindigkeit, einer hohen Belastung, bei der die Spannung im Schweißnahtbereich noch deutlich erhöht wird. Um die mit den Gefügeumwandlungen und Ausscheidungen in der Wärmeeinflusszone sowie mit den Zugeigenspannungen in der Schweißnaht verbundene Beeinträchtigung der Festigkeit und die daraus folgende Verringerung der Lebensdauer des geschweißten Rotors zu begrenzen, ist es bekannt, den Rotor nach dem Schweißen einer Wärmehandlung zu unterziehen, bei der die festigkeitsmindernde Schweißstruktur in der Wärmeeinflusszone eliminiert wird und die Zugeigenspannungen im Schweißnahtbereich verringert werden. Die Zugspannungen sind aber auch nach der Wärmebehandlung sowohl im Stillstand des Triebwerks und erst recht während der Rotation des Rotors im Betrieb des Triebwerks immer noch so hoch, dass die Lebensdauer des geschweißten Rotors begrenzt ist.

Der Erfindung liegt die Aufgabe zugrunde, ein Verfahren zur Herstellung geschweißter Rotoren mit verbesserten Festigkeitseigenschaften im Schweißnahtbereich und langer Lebensdauer anzugeben.

Erfindungsgemäß wird die Aufgabe mit einem Verfahren gemäß den Merkmalen des Patentanspruchs 1 gelöst. Vorteilhafte Weiterbildungen der Erfindung sind Gegenstand der Unteransprüche.

Ausgehend von den bekannten Verfahren zur Herstellung geschweißter Rotoren für Gasturbinentriebwerke, bei denen der Schweißnahtbereich nach dem Schweißen einer Wärmebehandlung bei einer bestimmten Temperatur (Tᵣₑₗₐₓₐₜᵢₒₙ) zum Abbau von Zugeigenspannungen infolge Relaxation unterworfen wird, besteht der Kern der Erfindung darin, dass bei der Wärmebehandlung die Temperatur der Schweißnaht auf ein deutlich niedrigeres, keine Relaxation bewirkendes Temperaturniveau (T_{Schweißnaht}<<Tᵣₑₗₐₓₐₜᵢₒₙ) als die an die Schweißnaht angrenzende Wärmeeinflusszone abgesenkt wird und dabei aufgrund des hohen Temperaturgradienten eine Druckeigenspannung oder zumindest stark reduzierte Zugeigenspannung in die Schweißnaht eingeprägt wird, so dass die Festigkeitseigenschaften in dieser im Betrieb hoch belasteten Schwachstelle erheblich verbessert und damit die Lebensdauer des so hergestellten Rotors erhöht wird. Die erfindungsgemäße Wärmebehandlung kann darüber hinaus auch in nicht geschweißten umlaufenden Bereichen des Rotors mit sehr hohen umlaufenden Zugspannungen durchgeführt werden, um auch dort die Zugspannungen -gegebenenfalls bis hin zu Druckspannungen - deutlich abzusenken.

In weiterer Ausbildung der Erfindung wird zunächst der gesamte Bereich der Wärmeeinflusszone und der Schweißnaht bei einer die Verringerung der Zugeigenspannung bewirkenden Temperatur (Tᵣₑₗₐₓₐₜᵢₒₙ) wärmebehandelt und anschließend wird nur die jeweils beidseitig abgeschirmte beiderseitige Wärmeeinflusszone bei gleicher Temperatur (Tᵣₑₗₐₓₐₜᵢₒₙ) weiter wärmebehandelt, während die Schweißnaht auf das niedrige Temperaturniveau (T_{schweißnaht}) gekühlt wird.

Die Kühlung der Schweißnaht und die Erwärmung des an die Schweißnaht angrenzenden Bereichs erfolgt mit mindestens einem Kühlmittelstrahl und mindestens einem Wärmestrahl. Der Wärmestrahl und der Kühlmittelstrahl werden zu dem jeweils benachbarten Bereich mittels Abschirmblechen abgeschirmt, so dass zur Schweißnaht hin tatsächlich ein hoher thermischer Gradient erzielt wird. Der Kühlmittelstrahl und der Wärmestrahl sind versetzt zueinander positioniert. Zur Erzielung einer gleichmäßigen Erwärmung bzw. Kühlung werden der Kühlmittel- und Wärmestrahl in einem von dem äußeren Bedingungen (Rotorkonstruktion, Rotorwerkstoff, Schweißparameter) abhängigen Zeitraum von einigen Minuten bis zu einigen Stunden kontinuierlich entlang dem Schweißnahtbereich bewegt, und zwar insbesondere durch Rotation des Rotors um dessen Längsachse mit einer ebenfalls von den äußeren Bedingungen abhängigen, ein homogenes Umfangstemperaturfeld erzeugenden Drehgeschwindigkeit.

In Ausgestaltung der Erfindung wird der Kühlmittelstrahl mittels Druckluft und der Wärmestrahl mit einer - vorzugsweise von einem Acetylenbrenner bereitgestellten - Gasflamme erzeugt.

In vorteilhafter Weiterbildung des durch die Ausbildung eines thermischen Gradienten im Schweißnahtbereich gekennzeichneten Grundgedankens der Erfindung kann zunächst auch der gesamte Bereich der Wärmeeinflusszone und der Schweißnaht bei einer die Verringerung der Zugeigenspannungen bewirkenden Temperatur (Tᵣₑₗₐₓₐₜᵢₒₙ) wärmebehandelt und anschließend nur die Schweißnaht auf das niedrige Temperaturniveau (T_{schweißnaht}) gekühlt werden In diesem Fall kann auf die zusätzlichen Wärmestrahler in der Wärmeeinflusszone verzichtet werden und es erfolgt lediglich eine Kühlung der Schweißnaht mit mindestens einem zu den angrenzenden Bereichen abgeschirmten, kontinuierlich entlang der Schweißnaht bewegten, vorzugsweise durch Druckluft gebildeten Kühlmittelstrahl.

Der Rotor wird während Kühlbehandlung wieder mit einer solchen Geschwindigkeit gedreht, in Umfangsrichtung der Schweißnaht eine gleichmäßige Temperatur gewährleistet ist.

Gemäß einer noch anderen vorteilhaften Weiterbildung des in der Wärmebehandlung mit einem hohen thermischen Gradienten liegenden Grundgedankens der Erfindung erfolgt unmittelbar nach dem Schweißen, das heißt noch in der Schweißanlage, nur in dem beiderseitig an die Schweißnaht angrenzenden Bereich eine Erwärmung mit der Punktenergie eines sich kontinuierlich relativ zum Rotor bewegenden Schweißstrahls, um aufgrund des dadurch bewirkten Temperaturgradienten eine Druckeigenspannung in die Schweißnaht einzuprägen und somit die Festigkeitseigenschaften im Schweißnahtbereich zu verbessern. Zum Einbringen einer gegenüber der Schweißnaht abgegrenzten Punktenergie erfolgt die Erwärmung bevorzugt mit einem Elektronenstrahl. Die gleichmäßige Erwärmung dieses Bereichs ist durch die kontinuierliche Rotation des Rotors um seine Längsachse gewährleistet.

Zur Kontrolle der im Schweißnahtbereich erzielten Temperaturen ist eine auf den Schweißnahtbereich gerichtete Wärmebildkamera vorgesehen. Die Temperatur kann über die Einstellung der Kühlmittel- und Wärmestrahler sowie in Abhängigkeit von der Drehgeschwindigkeit des Rotors geregelt werden.

Unter der Voraussetzung, dass die miteinander zu verschweißenden Rotorscheiben aus einem Ni- oder Ti-basierten Schmiedewerkstoff bestehen, kann die Wärmebehandlungstemperatur (Tᵣₑₗₐₓₐₜᵢₒₙ) entsprechend dem jeweiligen Eigenspannungsprofil in einem Bereich zwischen 700°C und 800°C liegen und die Temperatur der gekühlten Schweißnaht (T_{schweißnaht})zur Erzeugung des thermischen Gradienten wird ca. 150°C niedriger eingestellt.

Die Anwendung der Erfindung kann auf der Grundlage einer Vielzahl konventioneller Schweißverfahren erfolgen. Bevorzugt werden die stumpf aneinander stoßenden Rotorscheiben durch Elektronenstrahlschweißen miteinander verbunden. Eine derartige Wärmebehandlung auf der Basis der Ausbildung eines hohen Temperaturgradienten ist auch in nicht geschweißten Bereichen des Rotors mit sehr hohen umlaufenden Zugspannungen vorteilhaft.

Ein Ausführungsbeispiel der Erfindung wird anhand der Zeichnung, in der in
- Fig. 1: die Spannungsverteilung im Schweißnahtbereich bei einem nach dem Stand der Technik ohne Temperaturgradient wärmebehandelten Rotor; und in
- Fig. 2: die Spannungsverteilung bei einem erfindungsgemäß hergestellten geschweißten Rotor;
graphisch dargestellt ist, und

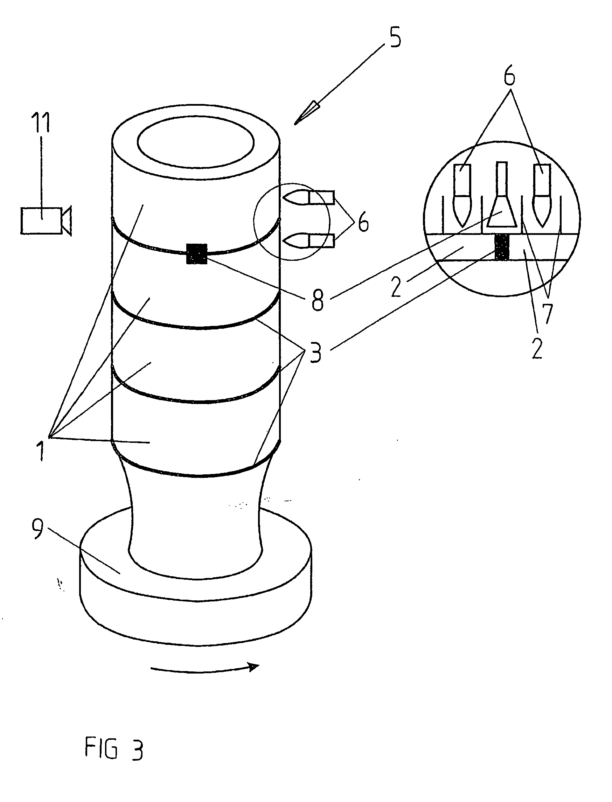

- Fig. 3: schematisch eine Vorrichtung zur Schweißnahtwärmebehandlung bei einem aus mehreren miteinander verschweißten Rotorscheiben bestehenden Rotor
wiedergibt.

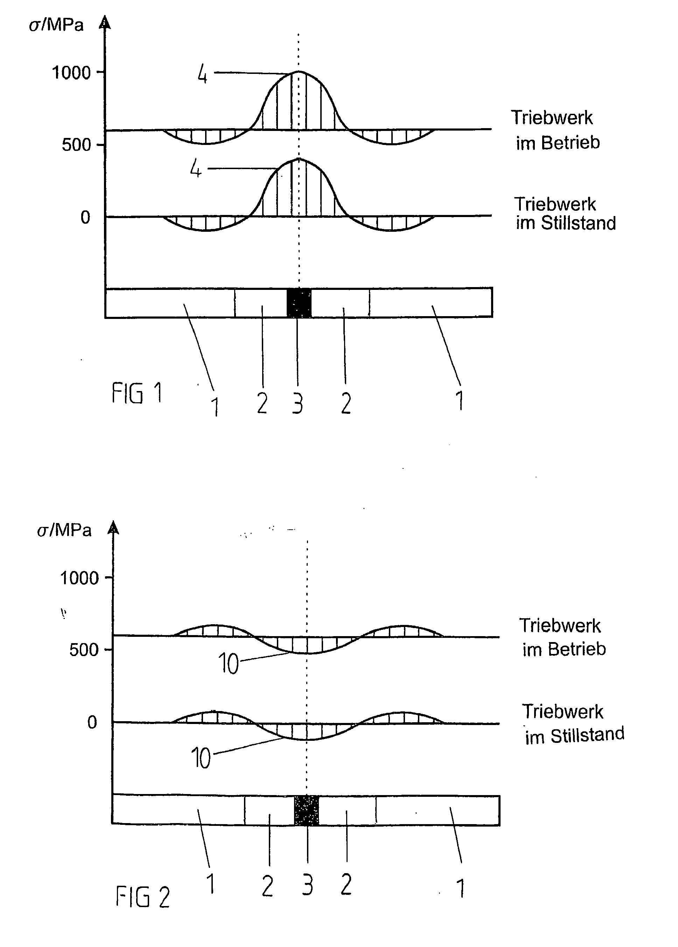

Fig. 1 zeigt die Spannungsverteilung über zwei durch Elektronenstrahlschweißen miteinander verbundenen Rotorscheiben 1 im Bereich der Schweißnaht 3 und der an diese beiderseitig angrenzenden Zone. Die geschmiedeten Rotorscheiben 1 bestehen aus einem hochwarmfesten Schmiedewerkstoff auf Nickelbasis, im vorliegenden Ausführungsbeispiel INCO 718. Durch eine gemäß dem Stand der Technik nach dem Schweißen bei 760°C in einem Zeitraum von vier Stunden durchgeführte Wärmebehandlung (PWHT: post weld heat treatment) wird die Ausscheidung von Sprödphasen im Korn und an den Korngrenzen in den an die Schweißnaht 3 angrenzenden Wärmeeinflusszonen 2 verhindert. Darüber hinaus kann infolge der an den Schweißprozess anschließenden Wärmebehandlung (PWHT) die mit dem Bezugszeichen 4 gekennzeichnete Zugeigenspannung im Bereich der Schweißnaht 3 von ca. 800 MPa auf einen Wert von 395 MPa verringert werden. Im Betrieb des Triebwerks wird die Spannungsverteilung im Schweißnahtbereich aufgrund der hohen Fliehkräfte jedoch auf das in Fig. 1 gezeigte obere Niveau angehoben, so dass der Maximalwert der Zugeigenspannung etwa bei 1000 MPa liegen wird. Aufgrund der noch immer hohen Zugeigenspannung 4 im Schweißnahtbereich ist die Lebensdauer des so gefertigten, geschweißten Rotors 5 jedoch gering.

Der geschweißte und gemäß dem zuvor beschriebenen PWHT-Verfahren wärmebehandelte Rotor 5 wird daher anschließend einer weiteren Wärmebehandlung unterworfen, bei der der auf einem Drehteller 9 angeordnete und somit um seine Längsachse rotierende Rotor 5 nur in einem örtlich begrenzten, an die Schweißnaht 3 anschließenden Bereich, dessen jeweilige Breite etwa dem zweifachen Wert der Materialstärke oder der jeweiligen Breite der Wärmeeinflusszone 2 entspricht, mit einem als Gasbrenner ausgebildeten Wärmestrahler 6 auf 760°C erwärmt. Die Abschirmung des jeweiligen Wärmestrahls (der Gasflamme des Gasbrenners) nach beiden Seiten erfolgt mit Abschirmelementen 7, so dass tatsächlich nur die an die Schweißnaht 3 angrenzenden Bereiche erwärmt werden und dabei Spannungen durch Relaxation und Plastifizierung abgebaut werden. Gleichzeitig wird mit einem um 90° versetzt angeordneten Kühlmittelstrahler 8 (Druckluftstrahler) die Schweißnaht 3 gekühlt und dabei auf einer Temperatur von 610°C gehalten, so dass, wie Fig. 2 zeigt, durch die Umkehrung der Temperaturverhältnisse gegenüber dem Schweißprozess, das heißt: kühlerer Schweißnahtbereich und beidseitig benachbarte wärmere Wärmeeinflusszone 2, das Eigenspannungsprofil umgekehrt wird und in der Schweißnaht 3 Druckeigenspannungen 10 erzeugt werden sowie das Spannungsniveau im Schweißnahtbereich insgesamt deutlich gesenkt wird. Dementsprechend sind die Spannungsverhältnisse im hoch belasteten Schweißnahtbereich auch im Betriebszustand verändert und verringert, so dass eine wesentliche Erhöhung der Lebensdauer der Triebwerksrotoren erreicht werden kann.

Die Dauer der zweiten, auf einen engen Bereich neben der Schweißnaht begrenzten Wärmebehandlung bei separater Kühlung der Schweißnaht 3, das heißt mit einem hohen thermischen Gradienten zwischen der Schweißnaht 3 und dem an diese angrenzenden Bereich (Wärmeeinflusszone 2), lag im vorliegenden Ausführungsbeispiel bei 30 Minuten.

Wie oben erwähnt, erfolgt die örtliche Wärmebehandlung bzw. Kühlung des Schweißnahtbereichs während der Drehbewegung des Rotors 5, das heißt der Schweißnaht 3, um eine gleichmäßige Wärmeeinleitung mit vernachlässigbar kleinem Temperaturgradienten in Umfangsrichtung zu bewirken. Zu diesem Zweck wird der geschweißte Rotor 5 auch bereits vor der Wärmebehandlung/Kühlung des Schweißnahtbereichs in eine Drehbewegung versetzt. Die Drehgeschwindigkeit des Rotors 5 lag im vorliegenden Ausführungsbeispiel bei zwei Umdrehungen pro Sekunde. Die Temperatureinstellung im Wärmebehandlungs-/Kühlbereich, die über die Wärmestrahler 6 und die Kühlmittelstrahler 8 sowie über die Drehgeschwindigkeit des Drehtellers 9 gesteuert werden kann, wird mit einer auf den betreffenden Schweißnahtbereich des Rotors 5 gerichteten Wärmebildkamera 11 kontrolliert.

Die Erfindung ist nicht auf das oben erläuterte Ausführungsbeispiel beschränkt. In Abhängigkeit vom Werkstoff und der konstruktiven Ausbildung des Rotors 5 sowie den jeweiligen Schweißparametern kann die Drehgeschwindigkeit zwischen 1 und 10 Umdrehungen/Sekunde betragen und die Dauer der mit einem hohen thermischen Gradienten durchgeführten Wärmebehandlung kann zwischen einigen Minuten und einigen Stunden liegen und selbstverständlich wird die Wärmebehandlung/Kühlung auch bei auf den jeweiligen Werkstoff abgestimmten Temperaturen erfolgen. Außer den Gasbrennern (Wärmestrahlern), Druckluftstrahlern (Kühlmittelstrahlern)und Abschirmblechen können auch andere Erwärmungs-, Kühl- und Abschirmmittel zur Erzielung des an der Schweißnaht abfallenden Temperaturgradienten und der dadurch bewirkten Druckspannungen in der Schweißnaht verwendet werden. Beispielsweise können anstelle einzelner Wärmestrahler auch beidseitig der Schweißnaht 3 angeordnete ringförmige Wärmestrahler vorgesehen sein.

In einer ersten Ausführungsvariante erfolgt unmittelbar nach der sich an den Schweißprozess anschließenden bekannten Wärmebehandlung des gesamten Schweißnahtbereichs, das heißt ohne weitere Wärmezufuhr am Rand der Schweißnaht, lediglich eine Kühlung der Schweißnaht 3 in der oben beschriebenen Weise, um auf diese Art Druckspannungen in die Schweißnaht einzuprägen.

Eine weitere Verfahrensvariante zur Erzeugung eines Temperaturabfalls in der Schweißnaht 3 gegenüber den an diese angrenzenden Rändern (Wärmeeinflusszone 2) der beiden aneinander gefügten Rotorscheiben 1 und damit zur Einprägung von Druckspannungen in die Schweißnaht 3 besteht noch darin, dass unmittelbar im Anschluss an den Schweißvorgang, das heißt noch in der Schweißanlage, nur die beiden an die Schweißnaht angrenzenden Randbereiche der miteinander verbundenen Rotorscheiben 1 mit einem - hier auch für die Erzeugung der Schweißnaht verwendeten - Elektronenstrahl erwärmt werden. Aufgrund des gegenüber dem Schweißvorgang umgekehrten hohen thermischen Gradienten zwischen den Randbereichen der Rotorscheiben und der Schweißnaht und der infolgedessen in die Schweißnaht eingeprägten Druckeigenspannung wird die Haltbarkeit der Rotorscheibenverbindung verbessert und die Lebensdauer des Rotors erhöht.

Die vorhergehenden Ausführungsvarianten wurden auf der Basis des Elektronenschweißens beschrieben. Selbstverständlich ist die Erfindung aber auch in Verbindung mit anderen, zur Verbindung der Rotorscheiben von Triebwerksrotoren geeigneten Schweißverfahren anwendbar.

### Bezugszeichenliste

- 1: Rotorscheiben
- 2: Wärmeeinflusszone
- 3: Schweißnaht
- 4: Zugeigenspannung nach konv. Wärmebehandlung
- 5: Rotor
- 6: Wärmestrahler, Gasbrenner
- 7: Abschirmelement, Abschirmblech
- 8: Kühlmittelstrahler, Druckluftstrahler
- 9: Drehteller
- 10: Druckeigenspannung
- 11: Wärmebildkamera

## Patentansprüche

1. Verfahren zur Herstellung eines geschweißten Rotors (5) für ein Gasturbinentriebwerk, bei dem zwei oder mehrere Rotorscheiben (1) mit herkömmlichen Schweißverfahren durch radial zur Rotorachse verlaufende Schweißnähte (3) miteinander verbunden werden und der Schweißnahtbereich anschließend einer Wärmebehandlung bei einer Temperatur (Tᵣₑₗₐₓₐₜᵢₒₙ) zum Abbau von Zugeigenspannungen infolge Relaxation unterworfen wird, **dadurch gekennzeichnet, dass** bei der Wärmebehandlung die Schweißnaht (3) auf ein deutlich niedrigeres, keine Relaxation bewirkendes Temperaturniveau (T_{schweißnaht}<<Tᵣₑₗₐₓₐₜᵢₒₙ) als die an die Schweißnaht angrenzende Wärmeeinflusszone (2) eingestellt wird und dabei aufgrund des hohen Temperaturgradienten stark reduzierte Zugeigenspannungen bis hin zu Druckeigenspannungen in die Schweißnaht (3) eingeprägt werden.

2. Verfahren nach Anspruch 1, **dadurch gekennzeichnet, dass** zunächst der gesamte Bereich der Wärmeeinflusszone (2) und der Schweißnaht (3) bei einer die Verringerung der Zugeigenspannung bewirkenden Temperatur (Tᵣₑₗₐₓₐₜᵢₒₙ) wärmebehandelt wird und anschließend nur die jeweils beidseitig abgeschirmte beiderseitige Wärmeeinflusszone (2) bei gleicher Temperatur (Tᵣₑₗₐₓₐₜᵢₒₙ) weiter wärmebehandelt wird, während die Schweißnaht auf das niedrige Temperaturniveau (T_{schweißnaht}) gekühlt wird.

3. Verfahren nach Anspruch 2, **dadurch gekennzeichnet, dass** die Kühlung der Schweißnaht und die Erwärmung des an die Schweißnaht angrenzenden Bereichs mit mindestens einem Kühlmittelstrahl und mindestens einem Wärmestrahl, die zu dem/den jeweils benachbarten Bereich/en abgeschirmt sind, durchgeführt wird, und der Kühlmittel- und Wärmestrahl sich kontinuierlich entlang dem Schweißnahtbereich bewegen.

4. Verfahren nach Anspruch 3, **dadurch gekennzeichnet, dass** der Kühlmittelstrahl und der Wärmestrahl versetzt zueinander positioniert sind.

5. Verfahren nach Anspruch 3, **dadurch gekennzeichnet, dass** der Kühlmittelstrahl mittels Druckluft und der Wärmestrahl mit einer Gasflamme erzeugt wird.

6. Verfahren nach Anspruch 3, **dadurch gekennzeichnet, dass** der Rotor (5) während der Dauer der Wärmebehandlung in eine kontinuierliche Drehbewegung versetzt wird

7. Verfahren nach Anspruch 6, **dadurch gekennzeichnet, dass** die Drehgeschwindigkeit des Rotors in einem ein homogenes Umfangstemperaturfeld erzeugenden Bereich liegt.

8. Verfahren nach Anspruch 1, **dadurch gekennzeichnet, dass** zunächst der gesamte Bereich der Wärmeeinflusszone (2) und der Schweißnaht (3) bei einer die Verringerung der Zugeigenspannungen bewirkenden Temperatur (Tᵣₑₗₐₓₐₜᵢₒₙ) wärmebehandelt wird und anschließend nur die Schweißnaht (3) auf das niedrige Temperaturniveau (T_{schweißnaht}) gekühlt wird.

9. Verfahren nach Anspruch 8, **dadurch gekennzeichnet, dass** die Kühlung der Schweißnaht (3) mit mindestens einem zu den angrenzenden Bereichen abgeschirmten, kontinuierlich entlang der Schweißnaht bewegten Kühlmittelstrahl durchgeführt wird.

10. Verfahren nach Anspruch 10, **dadurch gekennzeichnet, dass** der Rotor (5) während Kühlbehandlung mit einer Drehgeschwindigkeit gedreht wird, die in Umfangsrichtung der Schweißnaht eine gleichmäßige Temperatur gewährleistet.

11. Verfahren nach Anspruch 10, dass der Kühlmittelstrahl mittels Druckluft erzeugt wird.

12. Verfahren nach Anspruch 1, **dadurch gekennzeichnet, dass** unmittelbar nach dem Schweißen nur in dem an die Schweißnaht angrenzenden Bereich eine Erwärmung mit der Punktenergie eines sich kontinuierlich relativ zum Rotor (5) bewegenden Schweißstrahls erfolgt und aufgrund des **dadurch** bewirkten Temperaturgradienten eine Druckeigenspannung oder zumindest stark reduzierte Zugeigenspannung in die Schweißnaht (3) eingeprägt wird.

13. Verfahren nach Anspruch 12, **dadurch gekennzeichnet, dass** der Rotor während der Erwärmung mit dem Schweißstrahl eine kontinuierliche Rotation um seine Längsachse ausführt.

14. Verfahren nach Anspruch 12, **dadurch gekennzeichnet, dass** der Schweißstrahl ein Elektronstrahl ist.

15. Verfahren nach Anspruch 1, **dadurch gekennzeichnet, dass** die miteinander zu verschweißenden Rotorscheiben (1) aus einem Ni- oder Ti-basierten Schmiedewerkstoff bestehen, wobei die Wärmebehandlungstemperatur (Tᵣₑₗₐₓₐₜᵢₒₙ) entsprechend dem jeweiligen Eigenspannungsprofil zwischen 700°C und 800°C liegt und die Temperatur der gekühlten Schweißnaht (T_{schweißnaht})zur Erzeugung des thermischen Gradienten ca. 150°C niedriger eingestellt wird.

16. Verfahren nach Anspruch 1, **dadurch gekennzeichnet, dass** die Rotorscheiben (1) stumpf aneinander stoßen und durch Elektronenstrahlschweißen miteinander verbunden werden.
